# EUROPEAN PATENT APPLICATION

(11) **EP 4 414 421 A1**
(43) Date of publication of application: **14.08.2024**
(21) Application number: 22895496.2
(22) Date of filing: 09.11.2022
(51) Int. Cl.: C08L 33/04, C08F 220/34, C08K 5/053, C09K 3/18, D21H 17/37, D21H 19/20, D21H 21/14

(54) **POLYMER COMPOSITION**

(30) Priority: 16.11.2021 JP 2021186457
(71) Applicant: Daikin Industries, Ltd., Osaka-shi, Osaka 530-0001 (JP)
(72) Inventor: MATSUDA, Michio, Osaka-shi, Osaka 530-8323 (JP); SAKASHITA, Hirotoshi, Osaka-shi, Osaka 530-8323 (JP); KUSUKAWA, Yuka, Osaka-shi, Osaka 530-8323 (JP); UEHARA, Tetsuya, Osaka-shi, Osaka 530-8323 (JP); SHIBATA, Shun, Osaka-shi, Osaka 530-8323 (JP); NAKAMURA, Hisako, Osaka-shi, Osaka 530-8323 (JP)
(74) Representative: Hoffmann Eitle
(86) International application number: PCT/JP2022/041654
(87) International publication number: WO 2023/090214

(57) **Abstract**

Provided is an aqueous polymer dispersion exhibiting excellent liquid repellency, oil resistance, and lowtemperature storage stability, and obtained from a hydrocarbon group-containing polymer composition comprising (1) a hydrocarbon group-containing polymer having a repeating unit formed from an acrylic monomer having a hydrocarbon group having 7-40 carbon atoms, (2) a diol compound, and (3) an aqueous medium.

## Description

### Technical Field

The present disclosure relates to a polymer composition and, more specifically, a hydrocarbon group-containing polymer composition.

### Background Art

To date, compositions containing a hydrocarbon group-containing polymer have been proposed.

Patent Literature 1 (International Publication No. WO 2020/54856) discloses a paper oil-resistant agent containing a non-fluorine copolymer having (a) a repeating unit formed from an acrylic monomer having a long chain hydrocarbon group having 7 to 40 carbon atoms and (b) a repeating unit formed from an acrylic monomer having a hydrophilic group.

Patent Literature 2 (JP 2004-210962 A) discloses a water repellent composition containing (A) a silicone-acrylic copolymer, (B) an organopolysiloxane compound, and (C) an organic solvent. Moreover, the use of (D) a polyhydric alcohol is disclosed.

Patent Literature 3 (JP 2013-241716 A) discloses a food packaging paper coating agent containing an aqueous core-shell acrylic resin emulsion and an aqueous paraffin wax dispersion. The use of ethanol, isopropyl alcohol, propylene glycol, or glycerin as a solvent is disclosed.

### Citation List

### Patent Literature

Patent Literature 1
   International Publication No. WO 2020/54856
Patent Literature 2
   JP 2004-210962 A
Patent Literature 3
   JP 2013-241716 A

### Summary of Invention

### Technical Problem

An object of the present disclosure is to provide an aqueous polymer dispersion having excellent liquid repellency and oil-resistance as well as excellent low-temperature storage stability.

Conventional aqueous dispersions, after being frozen due to environmental influences or the like (for example, when an aqueous dispersion is frozen at a temperature below zero and thawed), do not return to their previous dispersed state before being frozen, and, accordingly, there is a need for an aqueous dispersion that returns after being thawed to its previous dispersed state.

### Solution to Problem

The present disclosure relates to a hydrocarbon group-containing polymer composition comprising:
(1) a hydrocarbon group-containing polymer, and
(2) a diol compound.

Preferable embodiments of the present disclosure are as follows.

### Embodiment 1:

A hydrocarbon group-containing polymer composition comprising:
(1) a hydrocarbon group-containing polymer having a repeating unit formed from an acrylic monomer having a hydrocarbon group having 7 to 40 carbon atoms,
(2) a diol compound, and
(3) an aqueous medium.

### Embodiment 2:

The hydrocarbon group-containing polymer composition according to Embodiment 1, wherein
the hydrocarbon group-containing polymer (1) further has a repeating unit formed from (b) an additional monomer, and
the additional monomer (b) comprises (b-11) an acrylic monomer having a hydrophilic group.

### Embodiment 3:

The hydrocarbon group-containing polymer composition according to Embodiment 1 or 2, wherein the acrylic monomer having a hydrocarbon group (a) is an acrylic monomer represented by the formula:

CH₂=C(-X¹)-C(=O)-Y¹-Z(-Y²-R¹)ₙ

wherein
R¹ is each independently a hydrocarbon group having 7 to 40 carbon atoms,
X¹ is a hydrogen atom, a monovalent organic group, or a halogen atom,
Y¹ is -O- or -NH-,
Y² is each independently a group composed of at least one selected from a direct bond, -O-, -C(=O)-, -S(=O)₂-, or -NH-,
Z is a direct bond or a divalent or trivalent hydrocarbon group having 1 to 5 carbon atoms, and
n is 1 or 2.

### Embodiment 4:

The hydrocarbon group-containing polymer composition according to any one of Embodiments 1 to 3, wherein the diol compound (2) is a compound represented by the formula:

HO-R-OH

wherein
R is an alkylene group having 3 to 8 carbon atoms.

### Embodiment 5:

The hydrocarbon group-containing polymer composition according to any one of Embodiments 1 to 4, wherein the diol compound (2) has a melting point of -40°C or lower, a viscosity (25°C, Brookfield viscosity) of 60 mPa·s or less, and a boiling point of 250°C or lower.

### Embodiment 6:

The hydrocarbon group-containing polymer composition according to any one of Embodiments 1 to 5, wherein the diol compound (2) is at least one selected from the group consisting of propylene glycol, butylene glycol, pentylene glycol, hexylene glycol, heptylene glycol, and octylene glycol.

### Embodiment 7:

The hydrocarbon group-containing polymer composition according to any one of Embodiments 1 to 6, wherein an amount of the diol compound (2) is 1 to 60 parts by weight based on 100 parts by weight of the polymer (1).

### Embodiment 8:

An oil-resistant agent comprising the hydrocarbon group-containing polymer composition according to any one of Embodiments 1 to 7.

### Embodiment 9:

A method for producing the hydrocarbon group-containing polymer composition according to any one of Embodiments 1 to 7, the method comprising:
polymerizing an acrylic monomer having a hydrocarbon group to give a hydrocarbon group-containing polymer, and
adding a diol compound to the hydrocarbon group-containing polymer.

### Embodiment 10:

Oil-resistant paper comprising the hydrocarbon group-containing polymer of the hydrocarbon group-containing polymer composition according to any one of Embodiments 1 to 7 inside, and/or on a surface of, the paper.

### Embodiment 11:

The oil-resistant paper according to Embodiment 10, which is a food packaging material or a food container.

### Advantageous Effects of Invention

The hydrocarbon group-containing polymer composition has excellent low-temperature storage stability. Moreover, the hydrocarbon group-containing polymer composition has good thawing properties that allow it to properly resume its previous state (for example, the viscosity of the composition (a dispersion or a solution), the dispersed state of the composition (a dispersion), the particle size of the composition (a dispersion), and the transparency of the composition (a solution)) at room temperature (25°C) even after being frozen. For example, in the composition (a dispersion or a solution), the viscosity barely changes, a separation or the like does not occur, and a uniform appearance is maintained.

### Description of Embodiment

The hydrocarbon group-containing polymer composition comprises:
(1) a hydrocarbon group-containing polymer,
(2) a diol compound, and
(3) an aqueous medium.

The hydrocarbon group-containing polymer composition may be an oil-resistant agent or may be a component of the oil-resistant agent. That is to say, the oil-resistant agent may be composed solely of the hydrocarbon group-containing polymer composition, or may comprise the hydrocarbon group-containing polymer composition.

### (1) Hydrocarbon group-containing polymer

The hydrocarbon group-containing polymer (1) is preferably a non-fluorine polymer containing no fluorine atoms. Preferably, none of the monomers constituting the hydrocarbon group-containing polymer (1) contain a fluorine atom.

The hydrocarbon group-containing polymer (1) has a repeating unit formed from (a) an acrylic monomer having a hydrocarbon group having 7 to 40 carbon atoms.

### (a) Acrylic monomer having hydrocarbon group

The acrylic monomer having a hydrocarbon group (a) has a hydrocarbon group having 7 to 40 carbon atoms. The hydrocarbon group having 7 to 40 carbon atoms is preferably a linear or branched hydrocarbon group having 7 to 40 carbon atoms. The number of carbon atoms in the hydrocarbon group is preferably 10 to 40, such as 12 to 30, and, in particular, 15 to 30. Alternatively, the number of carbon atoms in the hydrocarbon group may be 18 to 40 or 18 to 30.

The acrylic monomer (a) may be a compound represented by formula:

CH₂=C(-X¹)-C(=O)-Y¹-Z(-Y²-R¹)ₙ

wherein
R¹ is each independently a hydrocarbon group having 7 to 40 carbon atoms,
X¹ is a hydrogen atom, a monovalent organic group, or a halogen atom,
Y¹ is -O- or -NH-,
Y² is each independently a group composed of at least one selected from a direct bond, -O-, -C(=O)-, -S(=O)₂-, or -NH-,
Z is a direct bond or a divalent or trivalent hydrocarbon group having 1 to 5 carbon atoms, and
n is 1 or 2.
R¹ is preferably an aliphatic hydrocarbon group, in particular a saturated aliphatic hydrocarbon group, and especially an alkyl group. In R¹, the number of carbon atoms of the hydrocarbon group is preferably 12 to 30, such as 16 to 26 or 15 to 26, and in particular 18 to 22 or 17 to 22. Alternatively, the number of carbon atoms of R¹ may be 18 to 40 or 18 to 30.
X¹ may be a hydrogen atom, a methyl group, halogen excluding a fluorine atom, a substituted or unsubstituted benzyl group, or a substituted or unsubstituted phenyl group, and is preferably a hydrogen atom, a methyl group, or a chlorine atom.
Y² may be -Y'-, -Y'-Y'-, -Y'-C(=O)-, -C(=O)-Y'-, -Y'-C(=O)-Y'-, -Y'-R'-, -Y'-R'-Y'-, -Y'-R'-Y'-C(=O)-, -Y'-R'-C(=O)-Y'-, -Y'-R'-Y'-C(=O)-Y'-, or -Y'-R'-Y'-R'- wherein
Y' is each independently a direct bond, -O-, -NH-, or -S(=O)₂-, and
R' is -(CH₂)ₘ- wherein m is an integer of 1 to 5, a linear hydrocarbon group having 1 to 5 carbon atoms and an unsaturated bond, a hydrocarbon group having 1 to 5 carbon atoms and a branched structure, or -(CH₂)ₗ-C₆H₄-(CH₂)ₗ-wherein l is each independently an integer of 0 to 5, and -C₆H₄- is a phenylene group.

Specific examples of Y² include a direct bond, -O-, - NH-, -O-C(=O)-, -C(=O)-O-, -C(=O)-NH-, -NH-C(=O)-, -NH-S(=O)₂-, -S(=O)₂-NH-, -O-C(=O)-NH-, -NH-C(=O)-O-, -NH-C(=O)-NH-, -O-C₆H₄-, -NH-C₆H₄-, -O-(CH₂)ₘ-O-, -NH-(CH₂)ₘ-NH-, -O-(CH₂)ₘ-NH-, -NH-(CH₂)ₘ-O-, -O-(CH₂)ₘ-O-C(=O)-, -O-(CH₂)ₘ-C(=O)-O-, -NH-(CH₂)ₘ-O-C(=O)-, -NH-(CH₂)-C(=O)-O-, -O-(CH₂)ₘ-O-C(=O)-NH-, -O-(CH₂)ₘ-NH-C(=O)-O-, -O-(CH₂)ₘ-C(=O)-NH-, -O-(CH₂)ₘ-NH-C(=O)-, -O-(CH₂)ₘ-NH-C(=O)-NH-, -O-(CH₂)ₘ-O-C₆H₄-, -NH-(CH₂)ₘ-O-C(=O)-NH-, -NH-(CH₂)ₘ-NH-C(=O)-O-, -NH-(CH₂)ₘ-C(=O)-NH-, -NH-(CH₂)ₘ-NH-C(=O)-, -NH-(CH₂)ₘ-NH-C(=O)-NH-, -NH-(CH₂)ₘ-O-C₆H₄-, -NH-(CH₂)ₘ-NH-C₆H₄-wherein m is an integer of 1 to 5.

Y² is preferably -O-, -NH-, -O-C(=O)-, -C(=O)-O-, - C(=O)-NH-, -NH-C(=O)-, -NH-S(=O)₂-, -S(=O)₂-NH-, -O-C(=O)-NH-, -NH-C(=O)-O-, -NH-C(=O)-NH-, or -O-C₆H₄-. Y² is more preferably -NH-C(=O)-, -C(=O)-NH-, -O-C(=O)-NH-, -NH-C(=O)-O-, or -NH-C(=O)-NH-.

Z is a direct bond or a divalent or trivalent hydrocarbon group having 1 to 5 carbon atoms, and may have a linear structure or a branched structure. The number of carbon atoms of Z is preferably 2 to 4, and in particular 2. Specific examples of Z include a direct bond, -CH₂-, - CH₂CH₂-, -CH₂CH₂CH₂-, -CH₂CH₂CH₂CH₂-, -CH₂CH₂CH₂CH₂CH₂-, - CH₂CH= having a branched structure, -CH₂(CH-)CH₂- having a branched structure, -CH₂CH₂CH= having a branched structure, -CH₂CH₂CH₂CH₂CH= having a branched structure,-CH₂CH₂(CH-)CH₂- having a branched structure, and-CH₂CH₂CH₂CH= having a branched structure.

Z is preferably not a direct bond, and Y² and Z are simultaneously not direct bonds.

The acrylic monomer (a) is preferably CH₂=C(-X¹)-C(=O)-O-(CH₂)ₘ-NH-C(=O)-R¹, CH₂=C(-X¹)-C(=O)-O-(CH₂)ₘ-O-C(=O)-NH-R¹, CH₂=C(-X¹)-C(=O)-O-(CH₂)ₘ-NH-C(=O)-O-R¹, or CH₂=C(-X¹)-C(=O)-O-(CH₂)ₘ-NH-C(=O)-NH-R¹, wherein R¹ and X¹ are as defined above.

The acrylic monomer (a) is particularly preferably CH₂=C(-X¹)-C(=O)-O-(CH₂)ₘ-NH-C(=O)-R¹.

The acrylic monomer (a) can be produced by reacting hydroxyalkyl (meth)acrylate or hydroxyalkyl (meth)acrylamide with long-chain alkyl isocyanate. Examples of the long-chain alkyl isocyanate include lauryl isocyanate, myristyl isocyanate, cetyl isocyanate, stearyl isocyanate, oleyl isocyanate, and behenyl isocyanate.

Alternatively, the acrylic monomer (a) can also be produced by reacting (meth)acrylate having an isocyanate group in a side chain, such as 2-methacryloyloxyethyl isocyanate, with long-chain alkylamine or long-chain alkyl alcohol. Examples of the long-chain alkylamine include laurylamine, myristylamine, cetylamine, stearylamine, oleylamine, and behenylamine. Examples of the long-chain alkyl alcohol include lauryl alcohol, myristyl alcohol, cetyl alcohol, stearyl alcohol, oleyl alcohol, and behenyl alcohol.

Preferable examples of the hydrocarbon group-containing acrylic monomer (a) are as follows:
stearyl (meth)acrylate, behenyl (meth)acrylate, stearyl α-chloroacrylate, behenyl α-chloroacrylate;
stearyl (meth)acrylamide, behenyl (meth)acrylamide; 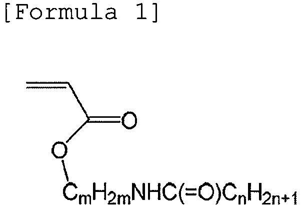 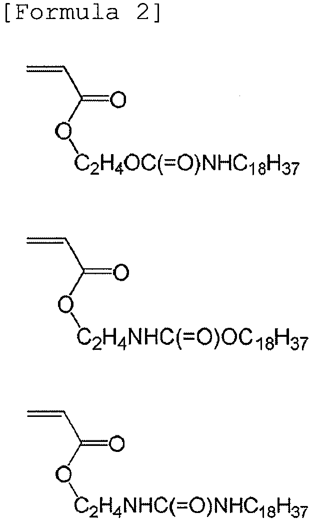 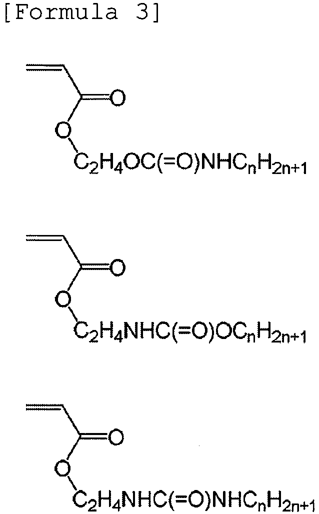 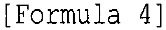 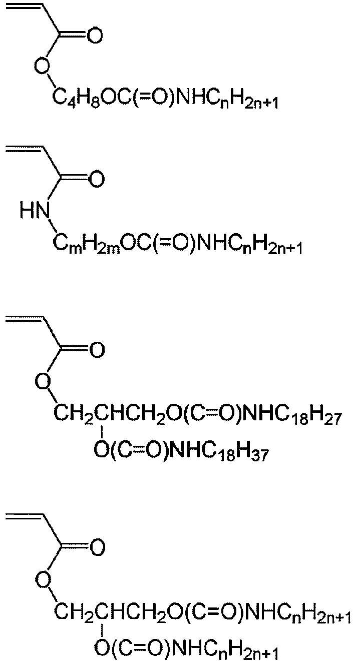 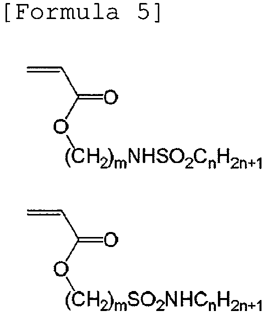
wherein n is a number of 7 to 40, and m is a number of 1 to 5.

While the compounds of the above chemical formulae are acrylic compounds in which the α-position is a hydrogen atom, specific examples may be methacrylic compounds in which the α-position is a methyl group and α-chloroacrylic compounds in which the α-position is a chlorine atom.

The melting point of the acrylic monomer having a hydrocarbon group (a) is preferably 10°C or higher, and more preferably 25°C or higher.

The acrylic monomer having a hydrocarbon group (a) is preferably an acrylate in which X¹ is hydrogen atoms.

The acrylic monomer (a) is preferably an amide group-containing monomer represented by formula:

R¹²-C(=O)-NH-R¹³-O-R¹¹

wherein
R¹¹ is an organic residue having an ethylenically unsaturated polymerizable group,
R¹² is a hydrocarbon group having 7 to 40 carbon atoms, and
R¹³ is a hydrocarbon group having 1 to 5 carbon atoms.

R¹¹ is an organic residue having an ethylenically unsaturated polymerizable group, and is not limited as long as there is a carbon-carbon double bond. Specific examples include organic residues having an ethylenically unsaturated polymerizable group such as -C(=O)CR¹⁴=CH₂, - CHR¹⁴=CH₂, and -CH₂CHR¹⁴=CH₂, and R¹⁴ is a hydrogen atom or an alkyl group having 1 to 4 carbon atoms. R¹¹ may have various organic groups other than the ethylenically unsaturated polymerizable group, e.g., organic groups such as chain hydrocarbons, cyclic hydrocarbons, polyoxyalkylene groups, and polysiloxane groups, and these organic groups may be substituted with various substituents. R¹¹ is preferably -C(=O)CR¹⁴=CH₂.

R¹² is a hydrocarbon group having 7 to 40 carbon atoms and preferably an alkyl group, such as a chain hydrocarbon group or a cyclic hydrocarbon group. Among them, a chain hydrocarbon group is preferable, and a linear saturated hydrocarbon group is particularly preferable. The number of carbon atoms of R¹² is 7 to 40, preferably 11 to 27, and particularly preferably 15 to 23.

R¹³ is a hydrocarbon group having 1 to 5 carbon atoms, and preferably an alkyl group. The hydrocarbon group having 1 to 5 carbon atoms may be either linear or branched, may have an unsaturated bond, and is preferably linear. The number of carbon atoms of R¹³ is preferably 2 to 4, and particularly preferably 2. R¹³ is preferably an alkylene group.

The amide group-containing monomer may be a monomer having one kind of R¹² (for example, a compound in which R¹² has 17 carbon atoms) or a monomer having a combination of multiple kinds of R¹² (for example, a mixture of a compound in which R¹² has 17 carbon atoms and a compound in which R¹² has 15 carbon atoms).

An example of the amide group-containing monomer is carboxylic acid amide alkyl (meth)acrylate.

Specific examples of the amide group-containing monomer include palmitic acid amide ethyl (meth)acrylate, stearic acid amide ethyl (meth)acrylate, behenic acid amide ethyl (meth)acrylate, myristic acid amide ethyl (meth)acrylate, lauric acid amide ethyl (meth)acrylate, isostearic acid ethylamide (meth)acrylate, oleic acid ethylamide (meth)acrylate, tert-butylcyclohexylcaproic acid amide ethyl (meth)acrylate, adamantanecarboxylic acid ethylamide (meth)acrylate, naphthalenecarboxylic acid amide ethyl (meth)acrylate, anthracenecarboxylic acid amide ethyl (meth)acrylate, palmitic acid amide propyl (meth)acrylate, stearic acid amide propyl (meth)acrylate, palmitic acid amide ethyl vinyl ether, stearic acid amide ethyl vinyl ether, palmitic acid amide ethyl allyl ether, stearic acid amide ethyl allyl ether, and mixtures thereof.

The amide group-containing monomer is preferably stearic acid amide ethyl (meth)acrylate. The amide group-containing monomer may be a mixture containing stearic acid amide ethyl (meth)acrylate. In a mixture containing stearic acid amide ethyl (meth)acrylate, the amount of stearic acid amide ethyl (meth)acrylate is, for example, 55 to 99% by weight, preferably 60 to 85% by weight, and more preferably 65 to 80% by weight based on the weight of the entirety of the amide group-containing monomer, and the remainder of the monomer may be, for example, palmitic acid amide ethyl (meth)acrylate.

In the hydrocarbon group-containing polymer (1), the amount of the repeating unit formed from the hydrocarbon group-containing acrylic monomer (a) (repeating unit (a)) is 20 to 100% by weight, 30 to 90% by weight, 40 to 85% by weight, or 50 to 80% by weight based on the hydrocarbon group-containing polymer.

While the hydrocarbon group-containing polymer may be formed solely from the acrylic monomer having a hydrocarbon group (a), the hydrocarbon group-containing polymer may be formed from an additional monomer (b) in addition to the acrylic monomer having a hydrocarbon group (a). In general, the hydrocarbon group-containing polymer preferably has a repeating unit formed from the additional monomer (b).

Examples of the additional monomer (b) are as follows:
one of, or a combination of two or more of, (b-11) an acrylic monomer having a hydrophilic group, (b-12) a monomer having an ion-donating group, and (b-13) a further monomer;
one of, or a combination of two or more of, (b-21) a non-crosslinkable monomer and (b-22) a crosslinkable monomer; and
one of, or a combination of two or more of, (b-31) an acrylate ester monomer, (b-32) a crosslinkable monomer, and (b-33) a halogenated olefin monomer.

In particular, the hydrocarbon group-containing polymer (1) preferably has a repeating unit formed from the acrylic monomer having a hydrophilic group (b-11).

Moreover, the hydrocarbon group-containing polymer (1) preferably has a repeating unit formed from the monomer having an ion-donating group (b-12) in addition to the monomers (a) and (b-11).

The hydrocarbon group-containing polymer (1) may have a repeating unit formed from the further monomer (b-13) in addition to the monomers (a), (b-11), and (b-12).

### (b-11) Acrylic monomer having hydrophilic group

The acrylic monomer having a hydrophilic group (b-11) is a monomer different from the monomer (a), and is a hydrophilic monomer. The hydrophilic group is preferably an oxyalkylene group (the number of carbon atoms in the alkylene group is 2 to 6), and, in particular, an oxyethylene group. In particular, the acrylic monomer having a hydrophilic group (b-11) is preferably oxyalkylene (meth)acrylate, such as polyalkylene (or monoalkylene) glycol mono(meth)acrylate, polyalkylene (or monoalkylene) glycol di(meth)acrylate, and/or polyalkylene (or monoalkylene) glycol mono(meth)acrylamide.

The acrylic monomer having a hydrophilic group (b-11) is preferably oxyalkylene (meth)acrylate represented by the formula:

CH₂=CX¹¹C(=O)-Y¹¹-(RO)ₙ-A

wherein
X¹¹ is a hydrogen atom or a methyl group;
Y¹¹ is -O- or -NH-;
R is an alkylene group having 2 to 6 carbon atoms;
A is a hydrogen atom, an unsaturated or saturated hydrocarbon group having 1 to 22 carbon atoms, or CH₂=CX¹¹C(=O)-, provided that X¹¹ is a hydrogen atom or a methyl group; and
n is an integer of 1 to 90.

The acrylic monomer having a hydrophilic group (b-11) is preferably represented by the formula:
CH₂=CX¹¹C(=O)-O-(RO)ₙ-X¹² (b1),
CH₂=CX¹¹C(=O)-O-(RO)ₙ-C(=O)CX¹¹=CH₂ (b2)

   , or
CH₂=CX¹¹C(=O)-NH-(RO)ₙ-X¹² (b3)

   wherein
   X¹¹ is each independently a hydrogen atom or a methyl group;
   X¹² is each independently a hydrogen atom or a saturated or unsaturated hydrocarbon group having 1 to 22 carbon atoms;
   R is each independently an alkylene group having 2 to 6 carbon atoms; and
   n is an integer of 1 to 90.

n may be, for example, 1 to 50, in particular 1 to 30, and especially 1 to 15 or 2 to 15. Alternatively, n may be, for example, 1.

R may be a linear or branched alkylene group such as a group represented by formula -(CH₂)ₓ- or -(CH₂)ₓ₁-(CH(CH₃))ₓ₂- wherein x1 and x2 are 0 to 6 such as 2 to 5, and the sum of x1 and x2 is 1 to 6; and the order of - (CH₂)ₓ₁- and- (CH(CH₃))ₓ₂- is not limited to the formula shown, and may be random.

In -(RO)ₙ-, there may be two or more kinds (such as 2 to 4 kinds, and in particular 2 kinds) of R, and thus - (RO)ₙ- may be a combination of, for example, -(R¹O)ₙ₁- and -(R²O)ₙ₂- wherein R¹ and R² are mutually different and an alkylene group having 2 to 6 carbon atoms, n1 and n2 are a number of 1 or more, and the sum of n1 and n2 is 2 to 90.

R in formulae (b1), (b2), and (b3) is particularly preferably an ethylene group, a propylene group, or a butylene group, and, in particular, a butylene group. R in formulae (b1), (b2), and (b3) may be a combination of two or more kinds of alkylene groups. In this case, at least one R is preferably an ethylene group, a propylene group, or a butylene group. Examples of the combination of R include a combination of an ethylene group/a propylene group, a combination of an ethylene group/a butylene group, and a combination of a propylene group/a butylene group. The monomer (b-11) may be a mixture of two or more kinds. In this case, in at least one monomer (b-11), R in formula (b1), (b2), or (b3) is preferably an ethylene group, a propylene group, or a butylene group. Polyalkylene glycol di(meth)acrylate represented by formula (b2) is not preferably used solely as the monomer (b-11), and is preferably used in combination with the monomer (b1). In this case as well, the compound represented by formula (b2) is preferably less than 30% by weight in the monomer (b-11) used.

Specific examples of the acrylic monomer having a hydrophilic group (b-11) include, but are not limited to, the following.

CH₂=CHCOO-CH₂CH₂O-H

CH₂=CHCOO-CH₂CH₂CH₂O-H

CH₂=CHCOO-CH₂CH(CH₃)O-H

CH₂=CHCOO-CH(CH₃)CH₂O-H

CH₂=CHCOO-CH₂CH₂CH₂CH₂O-H

CH₂=CHCOO-CH₂CH₂CH(CH₃)O-H

CH₂=CHCOO-CH₂CH(CH₃)CH₂O-H

CH₂=CHCOO-CH(CH₃)CH₂CH₂O-H

CH₂=CHCOO-CH₂CH(CH₂CH₃)O-H

CH₂=CHCOO-CH₂C(CH₃)₂O-H

CH₂=CHCOO-CH(CH₂CH₃)CH₂O-H

CH₂=CHCOO-C(CH₃)₂CH₂O-H

CH₂=CHCOO-CH(CH₃)CH (CH₃)O-H

CH₂=CHCOO-C(CH₃)(CH₂CH₃)O-H

CH₂=CHCOO-(CH₂CH₂O)₂-H

CH₂=CHCOO-(CH₂CH₂O)₄-H

CH₂=CHCOO-(CH₂CH₂O)₅-H

CH₂=CHCOO-(CH₂CH₂O)₆-H

CH₂=CHCOO-(CH₂CH₂O)₅-CH₃

CH₂=CHCOO- (CH₂CH₂O)₉-CH₃

CH₂=CHCOO-(CH₂CH₂O)₂₃-CH₃

CH₂=CHCOO-(CH₂CH₂O)₉₀-CH₃

CH₂=CHCOO-(CH₂CH(CH₃)O)₉-H

CH₂=CHCOO-(CH₂CH(CH₃)O)₉-CH₃

CH₂=CHCOO-(CH₂CH(CH₃)O)₁₂-CH₃

CH₂=CHCOO-(CH₂CH₂O)₅-(CH₂CH(CH₃)O)₂-H

CH₂=CHCOO-(CH₂CH₂O)₅-(CH₂CH(CH₃)O)₃-CH₃

CH₂=CHCOO-(CH₂CH₂O)₈-(CH₂CH(CH₃)O)₆-CH₂CH(C₂H₅)C₄H₉

CH₂=CHCOO-(CH₂CH₂O)₂₃-OOC(CH₃)C=CH₂

CH₂=CHCOO-(CH₂CH₂O)₂₀-(CH₂CH(CH₃)O)₅-CH₂-CH=CH₂

CH₂=CHCOO-(CH₂CH₂O)₉-H

CH₂=C(CH₃)COO-CH₂CH₂O-H

CH₂=C(CH₃)COO-CH₂CH₂CH₂O-H

CH₂=C(CH₃)COO-CH₂CH(CH₃)O-H

CH₂=C(CH₃)COO-CH(CH₃)CH₂O-H

CH₂=C(CH₃)COO-CH₂CH₂CH₂CH₂O-H

CH₂=C(CH₃)COO-CH₂CH₂CH(CH₃)O-H

CH₂=C(CH₃)COO-CH₂CH(CH₃)CH₂O-H

CH₂=C(CH₃)COO-CH(CH₃)CH₂CH₂O-H

CH₂=C(CH₃)COO-CH₂CH(CH₂CH₃)O-H

CH₂=C(CH₃)COO-CH₂C(CH₃)₂O-H

CH₂=C(CH₃)COO-CH(CH₂CH₃)CH₂O-H

CH₂=C(CH₃)COO-C(CH₃)₂CH₂O-H

CH₂=C(CH₃)COO-CH(CH₃)CH(CH₃)O-H

CH₂=C(CH₃)COO-C(CH₃)(CH₂CH₃)O-H

CH₂=C(CH₃)COO-(CH₂CH₂O)₂-H

CH₂=C(CH₃)COO-(CH₂CH₂O)₄-H

CH₂=C(CH₃)COO-(CH₂CH₂O)₅-H

CH₂=C(CH₃)COO-(CH₂CH₂O)₆-H

CH₂=C(CH₃)COO-(CH₂CH₂O)₉-H

CH₂=C(CH₃)COO-(CH₂CH₂O)₅-CH₃

CH₂=C(CH₃)COO-(CH₂CH₂O)₉-CH₃

CH₂=C(CH₃)COO-(CH₂CH₂O)₂₃-CH₃

CH₂=C(CH₃)COO-(CH₂CH₂O)₉₀-CH₃

CH₂=C(CH₃)COO-(CH₂CH(CH₃)O)₉-H

CH₂=C(CH₃)COO-(CH₂CH(CH₃)O)₉-CH₃

CH₂=C(CH₃)COO-(CH₂CH(CH₃)O)₁₂-CH₃

CH₂=C(CH₃)COO-(CH₂CH₂O)₅-(CH₂CH(CH₃)O)₂-H

CH₂=C(CH₃)COO-(CH₂CH₂O)₅-(CH₂CH(CH₃)O)₃-CH₃

CH₂=C(CH₃)COO-(CH₂CH₂O)₈-(CH₂CH(CH₃)O)₆-CH₂CH(C₂H₅)C₄H₉

CH₂=C(CH₃)COO-(CH₂CH₂O)₂₃-OOC(CH₃)C=CH₂

CH₂=C(CH₃)COO-(CH₂CH₂O)₂₀-(CH₂CH(CH₃)O)₅-CH₂-CH=CH₂

CH₂=CH-C(=O)-NH-CH₂CH₂O-H

CH₂=CH-C(=O)-NH-CH₂CH₂CH₂O-H

CH₂=CH-C(=O)-NH-CH₂CH(CH₃)O-H

CH₂=CH-C(=O)-NH-CH(CH₃)CH₂O-H

CH₂=CH-C(=O)-NH-CH₂CH₂CH₂CH₂O-H

CH₂=CH-C(=O)-NH-CH₂CH₂CH(CH₃)O-H

CH₂=CH-C(=O)-NH-CH₂CH(CH₃)CH₂O-H

CH₂=CH-C(=O)-NH-CH(CH₃)CH₂CH₂O-H

CH₂=CH-C(=O)-NH-CH₂CH(CH₂CH₃)O-H

CH₂=CH-C(=O)-NH-CH₂C(CH₃)₂O-H

CH₂=CH-C(=O)-NH-CH(CH₂CH₃)CH₂O-H

CH₂=CH-C(=O)-NH-C(CH₃)₂CH₂O-H

CH₂=CH-C(=O)-NH-CH(CH₃)CH(CH₃)O-H

CH₂=CH-C(=O)-NH-C(CH₃)(CH₂CH₃)O-H

CH₂=CH-C(=O)-NH-(CH₂CH₂O)₂-H

CH₂=CH-C(=O)-NH-(CH₂CH₂O)₄-H

CH₂=CH-C(=O)-NH-(CH₂CH₂O)₅-H

CH₂=CH-C(=O)-NH-(CH₂CH₂O)₆-H

CH₂=CH-C(=O)-NH-(CH₂CH₂O)₉-H

CH₂=CH-C(=O)-NH-(CH₂CH₂O)₅-CH₃

CH₂=CH-C(=O)-NH-(CH₂CH₂O)₉-CH₃

CH₂=CH-C(=O)-NH-(CH₂CH₂O)₂₃-CH₃

CH₂=CH-C(=O)-NH-(CH₂CH₂O)₉₀-CH₃

CH₂=CH-C(=O)-NH-(CH₂CH(CH₃)O)₉-H

CH₂=CH-C(=O)-NH-(CH₂CH(CH₃)O)₉-CH₃

CH₂=CH-C(=O)-NH-(CH₂CH(CH₃)O)₁₂-CH₃

CH₂=CH-C(=O)-NH-(CH₂CH₂O)₅-(CH₂CH(CH₃)O)₂-H

CH₂=CH-C(=O)-NH-(CH₂CH₂O)₅-(CH₂CH(CH₃)O)₃-CH₃

CH₂=CH-C(=O)-NH-(CH₂CH₂O)₈-(CH₂CH(CH₃)O)₆-CH₂CH(C₂H₅)C₄H₉

CH₂=C(CH₃)-C(=O)-NH-CH₂CH₂O-H

CH₂=C(CH₃)-C(=O)-NH-CH₂CH₂CH₂O-H

CH₂=C(CH₃)-C(=O)-NH-CH₂CH(CH₃)O-H

CH₂=C(CH₃)-C(=O)-NH-CH(CH₃)CH₂O-H

CH₂=C(CH₃)-C(=O)-NH-CH₂CH₂CH₂CH₂O-H

CH₂=C(CH₃)-C(=O)-NH-CH₂CH₂CH(CH₃)O-H

CH₂=C(CH₃)-C(=O)-NH-CH₂CH(CH₃)CH₂O-H

CH₂=C(CH₃)-C(=O)-NH-CH(CH₃)CH₂CH₂O-H

CH₂=C(CH₃)-C(=O)-NH-CH₂CH(CH₂CH₃)O-H

CH₂=C(CH₃)-C(=O)-NH-CH₂C(CH₃)₂O-H

CH₂=C(CH₃)-C(=O)-NH-CH(CH₂CH₃)CH₂O-H

CH₂=C(CH₃)-C(=O)-NH-C(CH₃)₂CH₂O-H

CH₂=C(CH₃)-C(=O)-NH-CH(CH₃)CH(CH₃)O-H

CH₂=C(CH₃)-C(=O)-NH-C(CH₃)(CH₂CH₃)O-H

CH₂=C(CH₃)-C(=O)-NH-(CH₂CH₂O)₂-H

CH₂=C(CH₃)-C(=O)-NH-(CH₂CH₂O)₄-H

CH₂=C(CH₃)-C(=O)-NH-(CH₂CH₂O)₅-H

CH₂=C(CH₃)-C(=O)-NH-(CH₂CH₂O)₆-H

CH₂=C(CH₃)-C(=O)-NH-(CH₂CH₂O)₉-H

CH₂=C(CH₃)-C(=O)-NH-(CH₂CH₂O)₅-CH₃

CH₂=C(CH₃)-C(=O)-NH-(CH₂CH₂O)₉-CH₃

CH₂=C(CH₃)-C(=O)-NH-(CH₂CH₂O)₂₃-CH₃

CH₂=C(CH₃)-C(=O)-NH-(CH₂CH₂O)₉₀-CH₃

CH₂=C(CH₃)-C(=O)-NH-(CH₂CH(CH₃)O)₉-H

CH₂=C(CH₃)-C(=O)-NH-(CH₂CH(CH₃)O)₉-CH₃

CH₂=C(CH₃)-C(=O)-NH-(CH₂CH (CH₃)O)₁₂-CH₃

CH₂=C(CH₃)-C(=O)-NH-(CH₂CH₂O)₅-(CH₂CH(CH₃)O)₂-H

CH₂=C(CH₃)-C(=O)-NH-(CH₂CH₂O)₅-(CH₂CH(CH₃)O)₃-CH₃

CH₂=C(CH₃)-C(=O)-NH-(CH₂CH₂O)₈-(CH₂CH(CH₃)O)₆-CH₂CH(C₂H₅)C₄H₉

The monomer (b-11) is preferably acrylate or acrylamide in which X² is a hydrogen atom. In particular, the monomer (b-11) is preferably hydroxyethyl acrylate, hydroxypropyl acrylate, hydroxybutyl acrylate, or hydroxyethyl acrylamide.

### (b-12) Monomer having ion donating group

The monomer having an ion donating group (b-12) is a monomer different from the monomer (a) and the monomer (b-11). The monomer (b-12) is preferably a monomer having an olefinic carbon-carbon double bond and an ion donating group (in particular, an acrylic monomer). The ion donating group is an anion donating group and/or a cation donating group.

Examples of the monomer having an anion donating group include monomers having a carboxyl group, a sulfonic acid group, or a phosphoric acid group. Specific examples of the monomer having an anion donating group include (meth)acrylic acid, crotonic acid, maleic acid, fumaric acid, itaconic acid, citraconic acid, vinyl sulfonic acid, (meth)allylsulfonic acid, styrenesulfonic acid, phosphoric acid (meth)acrylate, vinylbenzenesulfonic acid, acrylamide tert-butyl sulfonic acid, and salts thereof.

Examples of salts of the anion donating group include alkali metal salts, alkaline earth metal salts, and ammonium salts, such as a methyl ammonium salt, an ethanol ammonium salt, and a triethanol ammonium salt.

In the monomer having a cation donating group, examples of the cation donating group include an amino group and preferably a tertiary amino group and a quaternary amino group. In the tertiary amino group, two groups bonded to the nitrogen atom are the same or different and are preferably an aliphatic group having 1 to 5 carbon atoms (in particular an alkyl group), an aromatic group having 6 to 20 carbon atoms (an aryl group), or an araliphatic group having 7 to 25 carbon atoms (in particular an aralkyl group such as a benzyl group (C₆H₅-CH₂-)). In the quaternary amino group, three groups bonded to the nitrogen atom are the same or different and are preferably an aliphatic group having 1 to 5 carbon atoms (in particular an alkyl group), an aromatic group having 6 to 20 carbon atoms (an aryl group), or an araliphatic group having 7 to 25 carbon atoms (in particular an aralkyl group such as a benzyl group (C₆H₅-CH₂-)). In the tertiary and quaternary amino groups, the remaining one group bonded to the nitrogen atom may have a carbon-carbon double bond. The cation donating group may be in the form of a salt.

A cation donating group that is a salt is a salt formed with an acid (an organic acid or an inorganic acid) . Organic acids such as carboxylic acids having 1 to 20 carbon atoms (in particular, monocarboxylic acids such as acetic acid, propionic acid, butyric acid, and stearic acid) are preferable. Dimethylaminoethyl (meth)acrylate, diethylaminoethyl (meth)acrylate, and salts thereof are preferable.

Specific examples of the monomer having a cation donating group are as follows.
CH₂=CHCOO-CH₂CH₂-N(CH₃)₂ and salts thereof (such as acetate)
CH₂=CHCOO-CH₂CH₂-N(CH₂CH₃)₂ and salts thereof (such as acetate)
CH₂=C(CH₃)COO-CH₂CH₂-N(CH₃)₂ and salts thereof (such as acetate)
CH₂=C(CH₃)COO-CH₂CH₂-N(CH₂CH₃)₂ and salts thereof (such as acetate)
CH₂=CHC(O)N(H)-CH₂CH₂CH₂-N(CH₃)₂ and salts thereof (such as acetate)
CH₂=CHCOO-CH₂CH₂-N(-CH₃)(-CH₂-C₆H₅) and salts thereof (such as acetate)
CH₂=C(CH₃)COO-CH₂CH₂-N(-CH₂CH₃)(-CH₂-C₆H₅) and salts thereof (such as acetate)
CH₂=CHCOO-CH₂CH₂-N⁺(CH₃)₃Cl⁻
CH₂=CHCOO-CH₂CH₂-N⁺(-CH₃)₂(-CH₂-C₆H₅)Cl⁻
CH₂=C(CH₃)COO-CH₂CH₂-N⁺(CH₃)₃Cl⁻
CH₂=CHCOO-CH₂CH(OH)CH₂-N⁺(CH₃)₃Cl⁻
CH₂=C(CH₃)COO-CH₂CH(OH)CH₂-N⁺(CH₃)₃Cl⁻
CH₂=C(CH₃)COO-CH₂CH(OH)CH₂-N⁺(-CH₂CH₃)₂(-CH₂-C₆H₅)Cl⁻
CH₂=C(CH₃)COO-CH₂CH₂-N⁺(CH₃)₃Br⁻
CH₂=C(CH₃)COO-CH₂CH₂-N⁺(CH₃)₃I⁻
CH₂=C(CH₃)COO-CH₂CH₂-N⁺(CH₃)₃O⁻SO₃CH₃
CH₂=C(CH₃)COO-CH₂CH₂-N⁺(CH₃)(-CH₂-C₆H₅)₂Br⁻

The monomer having an ion donating group (b-12) is preferably methacrylic acid, acrylic acid, and dimethylaminoethyl methacrylate, and more preferably methacrylic acid and dimethylaminoethyl methacrylate.

### (b-13) Another monomer

Another monomer (b-13) is a monomer different from the monomers (a), (b-11), and (b-12). Examples of such another monomer include ethylene, vinyl acetate, vinyl chloride, vinyl fluoride, halogenated vinyl styrene, α-methylstyrene, p-methylstyrene, polyoxyalkylene mono(meth)acrylate, (meth)acrylamide, diacetone (meth)acrylamide, methylollated (meth)acrylamide, N-methylol (meth)acrylamide, alkyl vinyl ether, halogenated alkyl vinyl ether, alkyl vinyl ketone, butadiene, isoprene, chloroprene, glycidyl (meth)acrylate, aziridinyl (meth)acrylate, benzyl (meth)acrylate, isocyanate ethyl (meth)acrylate, cyclohexyl (meth)acrylate, isobornyl (meth)acrylate, short-chain alkyl (meth)acrylate, maleic anhydride, (meth)acrylate having a polydimethylsiloxane group, and N-vinylcarbazole.

Examples of the combinations of monomers constituting the repeating units of the hydrocarbon group-containing polymer are as follows:

### Monomer (a)

Monomer (a) + Monomer (b-11)
Monomer (a) + Monomer (b-12)
Monomer (a) + Monomer (b-11) + Monomer (b-12)
Monomer (a) + Monomer (b-11) + Monomer (b-13)
Monomer (a) + Monomer (b-12) + Monomer (b-13)
Monomer (a) + Monomer (b-11) + Monomer (b-12) + Monomer (b-13)

The combination of monomers constituting the repeating units of the polymer is preferably "monomer (a) + monomer (b-11) + monomer (b-12)".

The amount of the repeating unit formed from the monomer (a) (repeating unit (a)) may be 30 to 95% by weight or 30 to 90% by weight, preferably 40 to 88% by weight (or 45 to 95% by weight), and more preferably 50 to 85% by weight, based on the hydrocarbon group-containing polymer (or based on the total of the repeating unit (a) and the repeating unit (b-11)). Alternatively, the amount of the repeating unit formed from the monomer (a) (repeating unit (a)) may be 30 to 95% by weight, preferably 50 to 88% by weight or 55 to 85% by weight, and more preferably 60 to 85% by weight based on the hydrocarbon group-containing polymer.

The amount of the repeating unit formed from the monomer (b-11) (repeating unit (b-11)) may be 5 to 70% by weight or 10 to 70% by weight, preferably 8 to 50% by weight, and more preferably 10 to 40% by weight, based on the hydrocarbon group-containing polymer (or based on the total of the repeating unit (a) and the repeating unit (b-11)). Alternatively, the amount of the repeating unit formed from the monomer (b-11) (repeating unit (b-11)) may be 5 to 70% by weight, preferably 8 to 50% by weight or 10 to 40% by weight, and more preferably 10 to 30% by weight based on the hydrocarbon group-containing polymer (or based on the total of the repeating unit (a) and the repeating unit (b-11)).

The amount of the repeating unit formed from the monomer (b-12) (repeating unit (b-12)) may be 30% by weight or less or 0.1 to 30% by weight, preferably 0.5 to 20% by weight, and more preferably 1 to 15% by weight or 2 to 12% by weight based on the hydrocarbon group-containing polymer.

The amount of the repeating unit formed from the monomer (b-13) (repeating unit (b-13)) may be 0 to 20% by weight, such as 1 to 15% by weight, and in particular 2 to 10% by weight based on the hydrocarbon group-containing polymer.

The additional monomer (b) may be one of or at least two of the non-crosslinkable monomer (b-21) and the crosslinkable monomer (b-22).

### (b-21) Non-crosslinkable monomer

The non-crosslinkable monomer may be a compound represented by the formula:

CH₂=CA-T

wherein
A is a hydrogen atom, a methyl group, or a halogen atom other than a fluorine atom (such as a chlorine atom, a bromine atom, or an iodine atom); and
T is a hydrogen atom, a halogen atom other than a fluorine atom (such as a chlorine atom, a bromine atom, or an iodine atom), a chain or cyclic hydrocarbon group having 1 to 40 carbon atoms, or a chain or cyclic organic group having 2 to 41 carbon atoms and having an ester bond.

Examples of the chain or cyclic hydrocarbon group having 1 to 40 carbon atoms include a linear or branched saturated or unsaturated (such as ethylenically unsaturated) aliphatic hydrocarbon group having 1 to 40 carbon atoms, a saturated or unsaturated (such as ethylenically unsaturated) alicyclic group having 4 to 40 carbon atoms, an aromatic hydrocarbon group having 6 to 40 carbon atoms, and an araliphatic hydrocarbon group having 7 to 40 carbon atoms.

Examples of the chain or cyclic organic group having 2 to 41 carbon atoms and having an ester bond include - C(=O)-O-Q and -O-C(=O)-Q wherein Q is a linear or branched saturated or unsaturated (such as ethylenically unsaturated) aliphatic hydrocarbon group having 1 to 40 carbon atoms, a saturated or unsaturated (such as ethylenically unsaturated) alicyclic group having 4 to 40 carbon atoms, an aromatic hydrocarbon group having 6 to 40 carbon atoms, or an araliphatic hydrocarbon group having 7 to 40 carbon atoms.

### (b-22) Crosslikable monomer

The polymer may have a repeating unit derived from a crosslinkable monomer.

The crosslinkable monomer is a monomer that does not contain a fluorine atom. The crosslinkable monomer may be a compound having at least two reactive groups and/or ethylenically unsaturated double bonds (preferably (meth)acrylate groups) and containing no fluorine atoms. The crosslinkable monomer may be a compound having at least two ethylenically unsaturated double bonds (preferably (meth)acrylate groups) or a compound having at least one ethylenically unsaturated double bond and at least one reactive group. Examples of the reactive group include a hydroxyl group, an epoxy group, a chloromethyl groups, a block isocyanate group, an amino group, and a carboxyl group.

The crosslinkable monomer may be mono(meth)acrylate, di(meth)acrylate, or mono(meth)acrylamide having a reactive group. Alternatively, the crosslinkable monomer may be di(meth)acrylate.

One example of the crosslinkable monomer is a vinyl monomer having a hydroxyl group.

Examples of the crosslinkable monomer include, but are not limited to, diacetone (meth)acrylamide, N-methylol (meth)acrylamide, hydroxyethyl (meth)acrylamide, hydroxymethyl (meth)acrylate, hydroxyethyl (meth)acrylate, 2,3-dihydroxypropyl (meth)acrylate, 3-chloro-2-hydroxypropyl (meth)acrylate, 2-acetoacetoxyethyl (meth)acrylate, butadiene, isoprene, chloroprene, monochloro vinyl acetate, vinyl methacrylate, glycidyl (meth)acrylate, 1,4-butanediol di(meth)acrylate, 1,6-hexanediol di(meth)acrylate, 1,9-nonanediol di(meth)acrylate, and neopentyl glycol di(meth)acrylate.

The amount of the repeating unit (repeating unit (a)) formed from the monomer (a) may be 30 to 95% by weight, 50 to 88% by weight, 55 to 85% by weight, or 60 to 85% by weight based on the hydrocarbon group-containing polymer.

The amount of the repeating unit formed from the monomer (b-21) (repeating unit (b-21)) may be 5 to 70% by weight, 10 to 60% by weight, 8 to 50% by weight, or 10 to 40% by weight based on the hydrocarbon group-containing polymer (or based on the total of the repeating unit (a) and the repeating unit (b-21)).

The amount of the repeating unit formed from the monomer (b-22) (repeating unit (b-22)) may be 30% by weight or less, 0.1 to 30% by weight, 0.5 to 20% by weight, 1 to 15% by weight, or 2 to 12% by weight based on the hydrocarbon group-containing polymer.

Alternatively, the additional monomer (b) may be one of, or a combination of two or more of, the acrylate ester monomer(b-31), the crosslinkable monomer (b-32), and the halogenated olefin monomer (b-33).

### (b-31) Acrylate ester monomer

The polymer may have a repeating unit derived from a further acrylate ester monomer (b-31) other than the monomer (a).

Examples of the further acrylate ester monomer are as follows:
(b-31-1) acrylate ester monomer having an aliphatic hydrocarbon group, and
(b-31-2) acrylate ester monomer having a cyclic hydrocarbon group.

### (b-31-1) Acrylate ester monomer having aliphatic hydrocarbon group

The polymer may have a repeating unit derived from an aliphatic hydrocarbon group-containing acrylate ester monomer. The aliphatic hydrocarbon group-containing acrylate ester monomer is a (meth)acrylate ester (i.e., acrylate or methacrylate).

A preferable example of the aliphatic hydrocarbon group-containing acrylate ester monomer is a compound represented by the formula:

CH₂=CA¹¹-C(=O)-O-A¹²

wherein
A¹¹ is a hydrogen atom or a methyl group; and
A¹² is a linear or branched aliphatic hydrocarbon group having 1 to 40 carbon atoms.

The aliphatic hydrocarbon group-containing acrylate ester monomer does not have a fluoroalkyl group. The aliphatic hydrocarbon group-containing acrylate ester monomer may contain a fluorine atom, but, preferably, does not contain a fluorine atom.

A¹² is a linear or branched hydrocarbon group. In particular, the linear or branched hydrocarbon group may be a linear hydrocarbon group. The linear or branched hydrocarbon group has 1 to 40, such as 10 to 40, and preferably 18 to 40 carbon atoms. The linear or branched hydrocarbon group preferably has 18 to 28 and, in particular, 18 or 22 carbon atoms, and is generally a saturated aliphatic hydrocarbon group, and, in particular, preferably an alkyl group.

Specific examples of the aliphatic hydrocarbon group-containing acrylate ester monomer include lauryl (meth)acrylate, cetyl (meth)acrylate, stearyl (meth)acrylate, and behenyl (meth)acrylate.

The presence of the aliphatic hydrocarbon group-containing acrylate ester results in a softer texture.

### (b-31-2) Acrylate ester monomer having cyclic hydrocarbon group

The polymer may have a repeating unit derived from a cyclic hydrocarbon group-containing acrylate ester monomer.

The cyclic hydrocarbon group-containing acrylate ester monomer is preferably a compound represented by the formula:

CH₂=CA²¹-C(=O)-O-A²²

wherein
A²¹ is a hydrogen atom, a methyl group, a halogen, a linear or branched alkyl group having 2 to 21 carbon atoms, a CFX¹X² group (provided that X¹ and X² are each a hydrogen atom, a fluorine atom, a chlorine atom, a bromine atom, or an iodine atom), a cyano group, a linear or branched fluoroalkyl group having 1 to 21 carbon atoms, a substituted or unsubstituted benzyl group, or a substituted or unsubstituted phenyl group; and
A²² is a cyclic hydrocarbon-containing group having 4 to 40 carbon atoms.

The cyclic hydrocarbon group-containing acrylate ester monomer is preferably a monomer, the homopolymer of which has a high glass transition point (such as 50°C or higher and, in particular, 80°C or higher).

The cyclic hydrocarbon group-containing acrylate ester monomer does not have a fluoroalkyl group. The cyclic hydrocarbon group-containing acrylate ester monomer may contain a fluorine atom, but, preferably, does not contain a fluorine atom.

Examples of A²¹ include a hydrogen atom, a methyl group, Cl, Br, I, F, CN, CF₃. A²¹ is preferably a chlorine atom.

A²² is a cyclic hydrocarbon group optionally having a chain group (such as a linear or branched hydrocarbon group). Examples of the cyclic hydrocarbon group include saturated or unsaturated monocyclic groups, polycyclic groups, and bridged-ring groups. The cyclic hydrocarbon group is preferably saturated. The cyclic hydrocarbon group has 4 to 40 and preferably 6 to 20 carbon atoms. Examples of the cyclic hydrocarbon group include an alicyclic group having 4 to 20 and, in particular, 5 to 12 carbon atoms, an aromatic group having 6 to 20 carbon atoms, and an araliphatic group having 7 to 20 carbon atoms. The number of carbon atoms in the cyclic hydrocarbon group is particularly preferably 15 or less, such as 12 or less. The cyclic hydrocarbon group is preferably a saturated alicyclic group.

Specific examples of the cyclic hydrocarbon group include a cyclohexyl group, a t-butylcyclohexyl group, an isobornyl group, a dicyclopentanyl group, and a dicyclopentenyl group.

Specific examples of the cyclic hydrocarbon group-containing acrylate ester monomer include:
cyclohexyl acrylate, t-butylcyclohexyl acrylate, benzyl acrylate, isobornyl acrylate, dicyclopentanyl acrylate, dicyclopentenyl acrylate; and
cyclohexyl methacrylate, t-butylcyclohexyl methacrylate, benzyl methacrylate, isobornyl methacrylate, dicyclopentanyl methacrylate, dicyclopentenyl methacrylate.

The presence of the cyclic hydrocarbon group-containing acrylate ester monomer may result in improved processing stability and increased water repellency.

### (b-32) Crosslinkable monomer

The polymer may have a repeating unit derived from a crosslinkable monomer.

The crosslinkable monomer is a monomer that does not contain a fluorine atom. The crosslinkable monomer may be a compound having at least two reactive groups and/or ethylenically unsaturated double bonds (preferably (meth)acrylate groups) and containing no fluorine atoms. The crosslinkable monomer may be a compound having at least two ethylenically unsaturated double bonds (preferably (meth)acrylate groups) or a compound having at least one ethylenically unsaturated double bond and at least one reactive group. Examples of the reactive group include a hydroxyl group, an epoxy group, a chloromethyl groups, a block isocyanate group, an amino group, and a carboxyl group.

The crosslinkable monomer may be mono(meth)acrylate, di(meth)acrylate, or mono(meth)acrylamide having a reactive group. Alternatively, the crosslinkable monomer may be di(meth)acrylate.

One example of the crosslinkable monomer is a vinyl monomer having a hydroxyl group.

Examples of the crosslinkable monomer include, but are not limited to, diacetone (meth)acrylamide, N-methylol (meth)acrylamide, hydroxyethyl (meth)acrylamide, hydroxymethyl (meth)acrylate, hydroxyethyl (meth)acrylate, 2,3-dihydroxypropyl (meth)acrylate, 3-chloro-2-hydroxypropyl (meth)acrylate, 2-acetoacetoxyethyl (meth)acrylate, butadiene, isoprene, chloroprene, monochloro vinyl acetate, vinyl methacrylate, glycidyl (meth)acrylate, 1,4-butanediol di(meth)acrylate, 1,6-hexanediol di(meth)acrylate, 1,9-nonanediol di(meth)acrylate, and neopentyl glycol di(meth)acrylate.

Due to the presence of the crosslinkable monomer, washing durability provided by the polymer is increased.

### (b-33) Halogenated olefin monomer

The polymer may have a repeating unit derived from a halogenated olefin monomer.

The halogenated olefin monomer does not have a fluorine atom.

The halogenated olefin monomer is preferably an olefin that has 2 to 20 carbon atoms and that is substituted with 1 to 10 chlorine atoms, bromine atoms, or iodine atoms. The halogenated olefin monomer is preferably a chlorinated olefin having 2 to 20 carbon atoms, and, in particular, an olefin having 1 to 5 chlorine atoms and 2 to 5 carbon atoms. Preferable specific examples of the halogenated olefin monomer are vinyl halides such as vinyl chloride, vinyl bromide and vinyl iodide, and vinylidene halides such as vinylidene chloride, vinylidene bromide and vinylidene iodide. Vinyl chloride increases water repellency (in particular, the durability of water repellency) and is thus preferable.

Due to the presence of a repeating unit derived from the halogenated olefin monomer, washing durability provided by the polymer is increased.

The amount of the repeating unit formed from the monomer (a) (repeating unit (a)) may be 30 to 95% by weight, 50 to 88% by weight, 55 to 85% by weight, or 60 to 85% by weight based on the hydrocarbon group-containing polymer.

The amount of the repeating unit formed from the monomer (b-31) (repeating unit (b-31)) may be 5 to 70% by weight, 10 to 60% by weight, 8 to 50% by weight, or 10 to 40% by weight based on the hydrocarbon group-containing polymer (or based on the total of the repeating unit (a) and the repeating unit (b-31)).

The amount of the repeating unit formed from the monomer (b-32) (repeating unit (b-32)) may be 30% by weight or less, 0.1 to 30% by weight, 0.5 to 20% by weight, 1 to 15% by weight, or 2 to 12% by weight based on the hydrocarbon group-containing polymer.

The amount of the repeating unit formed from the monomer (b-33) (repeating unit (b-33)) is 5 to 70% by weight, 10 to 60% by weight, 8 to 50% by weight, or 10 to 40% by weight based on the hydrocarbon group-containing polymer.

The weight average molecular weight of the hydrocarbon group-containing polymer may be 1,000 to 1,000,000 or 10,000,000, preferably 5,000 to 800,000 or 8,000,000, and more preferably 10,000 to 400,000 or 4,000,000. The weight average molecular weight is a value obtained in terms of polystyrene by gel permeation chromatography.

Herein, "(meth)acryl" means acryl or methacryl. For example, "(meth)acrylate" means acrylate or methacrylate.

### (2) Diol compound

The diol compound (2) is a compound that has an alkylene group having 3 to 8 carbon atoms and that has 2 hydroxyl groups.

The diol compound (2) is preferably a compound represented by the formula:

HO-R-OH

wherein
R is an alkylene group having 3 to 8 carbon atoms.

R is an alkylene group having 3 to 8 carbon atoms. Preferable specific examples of R include a propylene group, a butylene group, a pentylene group, and a hexylene group.

The melting point of the diol compound (2) may be - 40°C or lower, or -50°C or lower. The viscosity (25°C, Brookfield viscosity) of the diol compound (2) may be 60 mPa·s or less, or 40 mPa·s or less (such as 0.1 to 40 mPa·s). The boiling point of the diol compound (2) may be 250°C or lower, or 200°C or lower.

The diol compound (2) is readily miscible with water. Having a high saturated vapor pressure at a temperature equal to or lower than the boiling point, the diol compound (2) can be readily removed at, for example, 120°C or 150°C (a temperature during, for example, drying after fiber treatment).

Specific examples of the diol compound (2) include propylene glycol, butylene glycol, pentylene glycol, hexylene glycol, heptylene glycol, and octylene glycol. Propylene glycol and hexylene glycol are preferable.

The chemical formula of propylene glycol may be

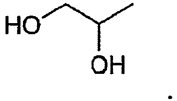

The chemical formula of hexylene glycol may be

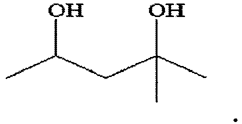

The amount of the diol compound (2) may be 1 to 60 parts by weight, preferably 10 to 50 parts by weight, more preferably 12 to 40 parts by weight, and, in particular, 14 to 28 parts by weight based on 100 parts by weight of the polymer (1).

Alternatively, the amount of diol compound (2) may by 0.01 to 20 parts by weight, such as 0.05 to 10 parts by weight or 0.1 to 5 parts by weight based on 100 parts by weight of the polymer composition (or a liquid containing the polymer).

### (3) Aqueous medium

The polymer composition contains the aqueous medium (3) in addition to the polymer (1) and the diol compound (2) .

The aqueous medium is water or a mixture of water and an organic solvent (an organic solvent that is miscible with water) (the amount of the organic solvent is 80 parts by weight or less, such as 0.1 to 50 parts by weight, and, in particular, 5 to 30 parts by weight based on 100 parts by weight of water). The amount of the aqueous medium may be 50% by weight to 99.99% by weight or 60 to 95% by weight based on the total amount of the polymer (1) and the aqueous medium.

The polymer composition that is a dispersion of the polymer is preferably formed by emulsion polymerization in which the monomers are polymerized in the presence of the aqueous medium. The polymer composition is preferably an aqueous dispersion, and more specifically an aqueous dispersion in which particles of the polymer are dispersed in the aqueous medium. In the dispersion, the average particle size of the particles of the hydrocarbon group-containing polymer is preferably 0.01 to 200 micrometers, such as 0.1 to 5 micrometers, and, in particular, 0.05 to 0.2 micrometers. The average particle size can be measured using a dynamic light scattering apparatus, an electron microscope, or the like.

### (4) Further component

The composition may contain a further component (4) other than the polymer (1), the diol compound (2), and the aqueous medium (3). An example of the further component (4) may be an emulsifier.

The emulsifier may be at least one selected from a nonionic emulsifier, a cationic emulsifier, an anionic emulsifier, and an amphoteric emulsifier. The amount of the emulsifier may be 0 to 30 parts by weight, such as 0.1 to 10 parts by weight, based on 100 parts by weight of the polymer (1).

### <Polymerization of hydrocarbon group-containing polymer>

Polymerization for the hydrocarbon group-containing polymer is not limited, and various polymerization methods can be selected, such as bulk polymerization, solution polymerization, emulsion polymerization, and radiation polymerization. For example, in general, solution polymerization involving an organic solvent, and emulsion polymerization involving water or involving an organic solvent and water in combination, are selected. The hydrocarbon group-containing polymer after polymerization is diluted with water to be emulsified in water and thus formed into a treatment liquid.

It is preferable that after polymerization involving an organic solvent as a medium (for example, solution polymerization or emulsion polymerization, preferably solution polymerization) is carried out, water is added, and then the solvent is removed to disperse the polymer in water. An emulsifier does not need to be added, and a self-dispersive product can be produced.

Examples of organic solvents include ketones such as acetone and methyl ethyl ketone, esters such as ethyl acetate and methyl acetate, glycols such as propylene glycol, dipropylene glycol monomethyl ether, N-methyl-2-pyrrolidone (NMP), dipropylene glycol, tripropylene glycol, and low molecular weight polyethylene glycol, and alcohols such as ethyl alcohol and isopropanol.

For example, peroxide, an azo compound, or a persulfate compound can be used as a polymerization initiator. The polymerization initiator is, in general, water-soluble and/or oil-soluble.

Specific examples of the oil-soluble polymerization initiator preferably include 2,2'-azobis(2-methylpropionitrile), 2,2'-azobis(2-methylbutyronitrile), 2,2'-azobis(2,4-dimethylvaleronitrile), 2,2'-azobis(2,4-dimethyl-4-methoxyvaleronitrile), 1,1'-azobis(cyclohexan-1-carbonitrile), dimethyl 2,2'-azobis(2-methylpropionate), 2,2'-azobis(2-isobutyronitrile), benzoyl peroxide, di-tert-butyl peroxide, lauryl peroxide, cumene hydroperoxide, t-butyl peroxypivalate, diisopropyl peroxydicarbonate, and t-butyl perpivalate.

Specific examples of the water-soluble polymerization initiator preferably include 2,2'-azobisisobutylamidine dihydrochloride, 2,2'-azobis(2-methylpropionamidine) hydrochloride, 2,2'-azobis[2-(2-imidazolin-2-yl)propane] hydrochloride, 2,2'-azobis[2-(2-imidazolin-2-yl)propane] sulfate hydrate, 2,2'-azobis[2-(5-methyl-2-imidazolin-2-yl)propane] hydrochloride, potassium persulfate, barium persulfate, ammonium persulfate, and hydrogen peroxide.

The polymerization initiator is used in the range of 0.01 to 5 parts by weight based on 100 parts by weight of the monomers.

In order to regulate the molecular weight, a chain transfer agent such as a mercapto group-containing compound may be used, and specific examples thereof include 2-mercaptoethanol, thiopropionic acid, and alkyl mercaptan. The mercapto group-containing compound is used in the range of 10 parts by weight or less, or 0.01 to 5 parts by weight, based on 100 parts by weight of the monomers.

Specifically, the hydrocarbon group-containing polymer can be produced as follows.

In solution polymerization, a method is employed that involves dissolving the monomers in an organic solvent, performing nitrogen purge, then adding a polymerization initiator, and heating and stirring the mixture, for example, in the range of 40 to 120°C for 1 to 10 hours. The polymerization initiator may be, in general, an oil-soluble polymerization initiator.

The organic solvent is inert to and dissolves the monomers, and examples include ketones such as acetone and methyl ethyl ketone, esters such as ethyl acetate and methyl acetate, glycols such as propylene glycol, dipropylene glycol monomethyl ether, N-methyl-2-pyrrolidone (NMP), dipropylene glycol, tripropylene glycol, and low molecular weight polyethylene glycol, alcohols such as ethyl alcohol and isopropanol, and hydrocarbon solvents such as n-heptane, n-hexane, n-octane, cyclohexane, methylcyclohexane, cyclopentane, methylcyclopentane, methylpentane, 2-ethylpentane, isoparaffin hydrocarbon, liquid paraffin, decane, undecane, dodecane, mineral spirit, mineral turpen, and naphtha. Preferable examples of the solvent include acetone, chloroform, HCFC 225, isopropyl alcohol, pentane, hexane, heptane, octane, cyclohexane, benzene, toluene, xylene, petroleum ether, tetrahydrofuran, 1,4-dioxane, methyl ethyl ketone, methyl isobutyl ketone, ethyl acetate, butyl acetate, 1,1,2,2-tetrachloroethane, 1,1,1-trichloroethane, trichloroethylene, perchloroethylene, tetrachlorodifluoroethane, trichlorotrifluoroethane, N-methyl-2-pyrrolidone (NMP), and dipropylene glycol monomethyl ether (DPM). The organic solvent is used in the range of 50 to 2,000 parts by weight, such as 50 to 1,000 parts by weight, based on total 100 parts by weight of the monomers.

In emulsion polymerization, a method is employed that involves emulsifying the monomers in water in the presence of an emulsifier, performing nitrogen purge, then adding a polymerization initiator, and stirring the mixture in the range of 40 to 80°C for 1 to 10 hours for polymerization. The polymerization initiator may be a water-soluble polymerization initiator such as 2,2'-azobisisobutylamidine dihydrochloride, 2,2'-azobis(2-methylpropionamidine) hydrochloride, 2,2'-azobis[2-(2-imidazolin-2-yl)propane] hydrochloride, 2,2'-azobis[2-(2-imidazolin-2-yl)propane] sulfate hydrate, 2,2'-azobis[2-(5-methyl-2-imidazolin-2-yl)propane] hydrochloride, potassium persulfate, barium persulfate, ammonium persulfate, or hydrogen peroxide; or an oil-soluble polymerization initiator such as 2,2'-azobis(2-methylpropionitrile), 2,2'-azobis(2-methylbutyronitrile), 2,2'-azobis(2,4-dimethylvaleronitrile), 2,2'-azobis(2,4-dimethyl-4-methoxyvaleronitrile), 1,1'-azobis(cyclohexan-1-carbonitrile), dimethyl 2,2'-azobis(2-methylpropionate), 2,2'-azobis(2-isobutyronitrile), benzoyl peroxide, di-tert-butyl peroxide, lauryl peroxide, cumene hydroperoxide, t-butyl peroxypivalate, diisopropyl peroxydicarbonate, or t-butyl perpivalate. The polymerization initiator is used in the range of 0.01 to 10 parts by weight based on 100 parts by weight of the monomers.

In order to obtain a water dispersion of the polymer, that has excellent stability when being left to stand, it is desirable that the monomers are formed into fine particles in water by using an emulsifying apparatus capable of applying strong crushing energy such as a highpressure homogenizer or an ultrasonic homogenizer, and polymerized by using an oil-soluble polymerization initiator. Various anionic, cationic, or nonionic emulsifiers can be used as emulsifiers, and are used in the range of 0.5 to 20 parts by weight based on 100 parts by weight of the monomers. An anionic and/or nonionic and/or cationic emulsifier is preferably used. When the monomers are not completely compatible, a compatibilizer such as a water-soluble organic solvent or a low molecular weight monomer that causes the monomers to be sufficiently compatible is preferably added. By adding a compatibilizer, emulsifiability and copolymerizability can be increased.

Examples of the water-soluble organic solvent include acetone, propylene glycol, dipropylene glycol monomethyl ether (DPM), dipropylene glycol, tripropylene glycol, ethanol, N-methyl-2-pyrrolidone (NMP), 3-methoxy-3-methyl-1-butanol, or isoprene glycol, and the water-soluble organic solvent may be used in the range of 1 to 50 parts by weight, such as 10 to 40 parts by weight, based on 100 parts by weight of water. By adding NMP or DPM or 3-methoxy-3-methyl-1-butanol or isoprene glycol (a preferable amount is, for example, 1 to 20% by weight, and particularly 3 to 10% by weight, based on the composition), the stability of the composition (in particular, the emulsion) is increased. Examples of the low molecular weight monomer include methyl methacrylate, glycidyl methacrylate, and 2,2,2-trifluoroethyl methacrylate, and the low molecular weight monomer may be used in the range of 1 to 50 parts by weight, such as 10 to 40 parts by weight, based on total 100 parts by weight of the monomers.

The hydrocarbon group-containing polymer composition is preferably produced as the form of a solution, an emulsion, or an aerosol. The hydrocarbon group-containing polymer composition contains the hydrocarbon group-containing polymer and a medium (for example, a liquid medium such as an organic solvent or water). The hydrocarbon group-containing polymer composition is preferably an aqueous dispersion of the hydrocarbon group-containing polymer.

In the hydrocarbon group-containing polymer composition, the concentration of the hydrocarbon group-containing polymer may be, for example, 0.01 to 50% by weight.

Removal of the organic solvent in the polymer solution can be performed by heating the polymer solution (for example, to 30°C or higher such as 50 to 120°C) (preferably under reduced pressure). An aqueous dispersion can be produced by removing the organic solvent from a solution of the polymer. While the organic solvent may be removed before adding water, the organic solvent is preferably removed after adding water.

Examples of treatment targets to be treated with the hydrocarbon group-containing polymer composition include fiber products, stone, filters (such as electrostatic filters), dust masks, fuel cell components (such as gas diffusion electrodes and gas diffusion supports), glass, paper, wood, leather, fur, asbestos, bricks, cement, metals and oxides, ceramic products, plastics, painted surfaces, and plasters. Fiber products include various examples. Examples include animal and plant-based natural fibers such as cotton, linen, wool, and silk; synthetic fibers such as polyamide, polyester, polyvinyl alcohol, polyacrylonitrile, polyvinyl chloride, and polypropylene; semi-synthetic fibers such as rayon and acetate; inorganic fibers such as glass fiber, carbon fiber, and asbestos fiber; and mixed fibers thereof.

For example, the hydrocarbon group-containing polymer composition can be used to treat (for example, to surfacetreat) the paper substrate.

The hydrocarbon group-containing polymer composition can be applied to the treatment target by a conventionally known method. Usually, a method is employed in which the hydrocarbon group-containing polymer composition is diluted by being dispersed in an organic solvent or water, attached to the surface of the treatment target by a known method such as dip coating, spray coating, or foam coating, and then dried (surface treatment).

Examples of the treatment-target paper substrate include paper, a container made of paper, and a molded article made of paper (for example, molded pulp).

The hydrocarbon group-containing polymer of the present disclosure favorably adheres to the paper substrate.

Paper can be produced by a conventionally known papermaking method. An internal treatment method in which the hydrocarbon group-containing polymer composition is added to a pulp slurry before papermaking, or an external treatment method in which the hydrocarbon group-containing polymer composition is applied to paper after papermaking, can be used.

In the present disclosure, the treatment target is treated with the hydrocarbon group-containing polymer composition. The "treatment" means that the hydrocarbon group-containing polymer composition is applied to the treatment target by dipping, spraying, coating, or the like. By the treatment, the hydrocarbon group-containing polymer, which is the active component of the hydrocarbon group-containing polymer composition, reaches the inside of the treatment target and/or adheres to the surface of the treatment target.

### Examples

Next, the present disclosure will now be described in detail by way of Examples, and Comparative Examples. However, the description of these does not limit the present disclosure.

Below, a part, %, and a ratio indicate a part by weight, % by weight, and a weight ratio, respectively, unless otherwise specified.

The test methods used below are as follows.

### [Storage test]

Samples (aqueous dispersions obtained in Comparative Examples 1 and 2 and Examples 1 to 3) were stored in a storage unit having an inner temperature of -5°C for 4 weeks. After 4 weeks, whether the aqueous dispersions had frozen or not were determined.
Good: Not frozen
Poor: Frozen, or had no fluidity

### [Thawing test]

Samples were stored at -20°C or lower for 12 hours or more, the frozen samples were left to stand still at a predetermined temperature to thaw, and then the viscosity (25°C, Brookfield viscosity) of the samples was measured.
Good: Viscosity of 500 mPa·s or less
Fair: Viscosity of more than 500 mPa·s and less than 1,000 mPa·s
Poor: Viscosity of 1,000 mPa·sor more

### Synthesis Example 1

A reactor having a volume of 500 ml and equipped with a stirrer, a thermometer, a reflux condenser, a dropping funnel, a nitrogen inlet, and a heater was charged with 100 parts of a methyl ethyl ketone (MEK) solvent. Subsequently, while the solvent was stirred, a monomer composed of 78 parts of stearamide ethyl acrylate (C18AmEA, melting point: 70°C), 16 parts of hydroxyethyl acrylate (HEA), and 6 parts of dimethylaminoethyl methacrylate (DM) (the monomer being 100 parts in total) as well as 1.2 parts of a perbutyl PV (PV) initiator were added in this order, and mixed by being stirred for 12 hours in a nitrogen atmosphere at 65 to 75°C to carry out copolymerization. The solid content concentration of the resulting copolymer-containing solution was 50% by weight.

As a post-treatment, 142 g of a 0.4% aqueous acetic acid solution was added to 50 g of the resulting copolymer solution and dispersed, then the mixture was heated by using an evaporator to distill off MEK under reduced pressure, and thus a milky white aqueous copolymer dispersion was obtained (the content of the volatile organic solvent was 1% by weight or less). Ion-exchanged water was added to the aqueous dispersion, and thus a aqueous dispersion was obtained that had a solid content concentration regulated to 26% by weight.

### Synthesis Example 2

A reactor having a volume of 500 ml and equipped with a stirrer, a thermometer, a reflux condenser, a dropping funnel, a nitrogen inlet, and a heater was charged with 110 parts of a methyl ethyl ketone (MEK) solvent. Subsequently, while the solvent was stirred, a monomer composed of 78 parts of stearamide ethyl acrylate (C18AmEA, melting point: 70°C), 19 parts of hydroxybutyl acrylate (HBA), and 3 parts of methacrylic acid (MAA) (the monomer being 100 parts in total) as well as 1.2 parts of a perbutyl PV (PV) initiator were added in this order, and mixed by being stirred for 12 hours in a nitrogen atmosphere at 65 to 75°C to carry out copolymerization. The solid content concentration of the resulting copolymer-containing solution was 48% by weight.

As a post-treatment, 125 g of a 0.4% aqueous sodium hydroxide solution was added to 50 g of the resulting copolymer solution and dispersed, then the mixture was heated by using an evaporator to distill off MEK under reduced pressure, and thus a milky white aqueous copolymer dispersion was obtained (the content of the volatile organic solvent was 1% by weight or less). Ion-exchanged water was added to the aqueous dispersion, and thus an aqueous dispersion was obtained that had a solid content concentration regulated to 26% by weight.

### Comparative Example 1

Ion-exchanged water was added to the aqueous dispersion obtained in Synthesis Example 1, and thus an aqueous dispersion was obtained that had a solid content concentration of 20% by weight. The viscosity of the aqueous dispersion was 100 mPa·s.

### Comparative Example 2

Ion-exchanged water and dipropylene glycol (melting point -40°C, boiling point 232°C) were added to the aqueous dispersion obtained in Synthesis Example 1, and thus an aqueous dispersion was obtained that had a solid content concentration of 20% by weight and a dipropylene glycol concentration based on solids of 28% by weight.

### Comparative Example 3

Ion-exchanged water was added to the aqueous dispersion obtained in Synthesis Example 2, and thus an aqueous dispersion was obtained that had a solid content concentration of 20% by weight. The viscosity of the aqueous dispersion was 70 mPa·s.

### Example 1

Ion-exchanged water and propylene glycol (melting point -59°C, boiling point 188°C) were added to the aqueous dispersion obtained in Synthesis Example 1, and thus an aqueous dispersion was obtained that had a solid content concentration of 20% by weight and a propylene glycol concentration based on solids of 14% by weight.

### Example 2

The same operation as Example 1 was performed, and thus an aqueous dispersion was obtained that had a solid content concentration of 20% by weight and a propylene glycol concentration based on solids of 28% by weight.

### Example 3

The same operation as Example 2 was performed except that hexylene glycol (melting point -50°C, boiling point 198°C) was used in place of propylene glycol of Example 2, and thus an aqueous dispersion was obtained that had a solid content concentration of 20% by weight and a hexylene glycol concentration based on solids of 28% by weight.

### Example 4

Ion-exchanged water and propylene glycol (melting point -59°C, boiling point 188°C) were added to the aqueous dispersion obtained in Synthesis Example 2, and thus an aqueous dispersion was obtained that had a solid content concentration of 15% by weight and a propylene glycol concentration based on solids of 14% by weight.

### Example 5

The same operation as Example 1 was performed, and thus an aqueous dispersion was obtained that had a solid content concentration of 15% by weight and a propylene glycol concentration based on solids of 28% by weight.

**[Table 1]**

| | | Com. Ex. 1 | Com. Ex. 3 | Ex. 1 | Ex. 2 | Ex. 4 | Ex. 5 | Ex. 3 | Com. Ex. 2 |
|---|---|---|---|---|---|---|---|---|---|
| Additive | Kind | Propylene glycol | | | | | | Hexylene glycol | Dipro -pylene glycol |
| | Amount added % by weight (based on amount of polymer solids) | 0% | 0% | 14% | 28% | 14% | 28% | 28% | 28% |
| Storage test | State after storage | Poor | Poor | Good | Good | Good | Good | Good | Poor |
| Thawing test | Appearance after thawing | Uniform | Uniform | Uniform | Uniform | Uniform | Uniform | Uniform | Uniform |
| | Viscosity after thawing mPa·s(Thawing temperature: 25°C/2 h) | Poor | Poor | Good | Good | Good | Good | Good | Fair |
| | | 1500 | 2500 | 130 | 90 | 250 | 170 | 350 | 950 |

### Industrial Applicability

The hydrocarbon group-containing polymer composition of the present disclosure can be used to treat a variety of substrates such as paper in particular.

## Claims

1. A hydrocarbon group-containing polymer composition comprising:
(1) a hydrocarbon group-containing polymer having a repeating unit formed from an acrylic monomer having a hydrocarbon group having 7 to 40 carbon atoms,
(2) a diol compound, and
(3) an aqueous medium.

2. The hydrocarbon group-containing polymer composition according to claim 1, wherein
the hydrocarbon group-containing polymer (1) further has a repeating unit formed from (b) an additional monomer, and
the additional monomer (b) comprises (b-11) an acrylic monomer having a hydrophilic group.

3. The hydrocarbon group-containing polymer composition according to claim 1 or 2, wherein the acrylic monomer having a hydrocarbon group (a) is an acrylic monomer represented by the formula:
CH₂=C(-X¹)-C(=O)-Y¹-Z(-Y²-R¹)ₙ
wherein
R¹ is each independently a hydrocarbon group having 7 to 40 carbon atoms;
X¹ is a hydrogen atom, a monovalent organic group, or a halogen atom;
Y¹ is -O- or -NH-;
Y² is each independently a group composed of at least one selected from a direct bond, -O-, -C(=O)-, -S(=O)₂-, or -NH-;
Z is a direct bond or a divalent or trivalent hydrocarbon group having 1 to 5 carbon atoms; and
n is 1 or 2.

4. The hydrocarbon group-containing polymer composition according to any one of claims 1 to 3, wherein the diol compound (2) is a compound represented by the formula:
HO-R-OH
wherein
R is an alkylene group having 3 to 8 carbon atoms.

5. The hydrocarbon group-containing polymer composition according to any one of claims 1 to 4, wherein the diol compound (2) has a melting point of -40°C or lower, a viscosity (25°C, Brookfield viscosity) of 60 mPa·sor less, and a boiling point of 250°C or lower.

6. The hydrocarbon group-containing polymer composition according to any one of claims 1 to 5, wherein the diol compound (2) is at least one selected from the group consisting of propylene glycol, butylene glycol, pentylene glycol, hexylene glycol, heptylene glycol, and octylene glycol.

7. The hydrocarbon group-containing polymer composition according to any one of claims 1 to 6, wherein an amount of the diol compound (2) is 1 to 60 parts by weight based on 100 parts by weight of the polymer (1).

8. An oil-resistant agent comprising the hydrocarbon group-containing polymer composition according to any one of claims 1 to 7.

9. A method for producing the hydrocarbon group-containing polymer composition according to any one of claims 1 to 7, the method comprising:
polymerizing an acrylic monomer having a hydrocarbon group to give a hydrocarbon group-containing polymer, and
adding a diol compound to the hydrocarbon group-containing polymer.

10. Oil-resistant paper comprising the hydrocarbon group-containing polymer of the hydrocarbon group-containing polymer composition according to any one of claims 1 to 7 inside, and/or on a surface of, the paper.

11. The oil-resistant paper according to claim 10, which is a food packaging material or a food container.
